# EUROPEAN PATENT SPECIFICATION

(11) **EP 2 168 019 B1**
(45) Date of publication and mention of the grant of the patent: **07.03.2012**
(21) Application number: 08780739.2
(22) Date of filing: 02.06.2008
(51) Int. Cl.: G05B 23/02

(54) **SELF-CONFIGURING DATA ACQUISITION SYSTEM FOR DIAGNOSTIC TESTING**
DATENERFASSUNGSSYSTEM MIT SELBSTKONFIGURATION FÜR DIAGNOSTISCHE TESTS
SYSTÈME D'ACQUISITION DE DONNÉES À CONFIGURATION AUTOMATIQUE POUR UN ESSAI DE DIAGNOSTIC

(30) Priority: 12.06.2007 US 943342 P; 19.06.2007 US 764812
(43) Date of publication of application: 31.03.2010
(73) Proprietor: Crane Nuclear, Inc., Kennesaw, Georgia 30152 (US)
(72) Inventor: ANDERSON, Paul, Gene, Acworth, GA 30101 (US); MORRIS, Tony, John, Marietta, GA 30068 (US); SMITH, Christopher, Paul, Woodstock, GA 30189 (US); HEAGERTY, David, Quinn, Glen Mills, PA 19342 (US)
(74) Representative: Hofstetter, Alfons J.
(86) International application number: PCT/US2008/065468
(87) International publication number: WO 2008/154195

(56) References cited:
- GB-A- 2 403 043
- US-A1- 2002 095 515
- US-A1- 2006 075 009

## Description

### Background of the Invention

The present invention is related generally to data acquisition systems for diagnostic system and, more particularly, to self-configuring data acquisition systems for diagnostic systems.

Portable data acquisition systems are used in the nuclear power industry to measure the performance characteristics of power-operated valves and motors. Various commercially available sensors, such as motor current probes and pressure transmitters, and valve-specific sensors, such as strain gage instruments and displacement measuring tools, are used simultaneously on a valve to determine the condition of the valve and its performance. Depending upon the equipment that is being monitored, various sensors and signal conditioning channels will be used.

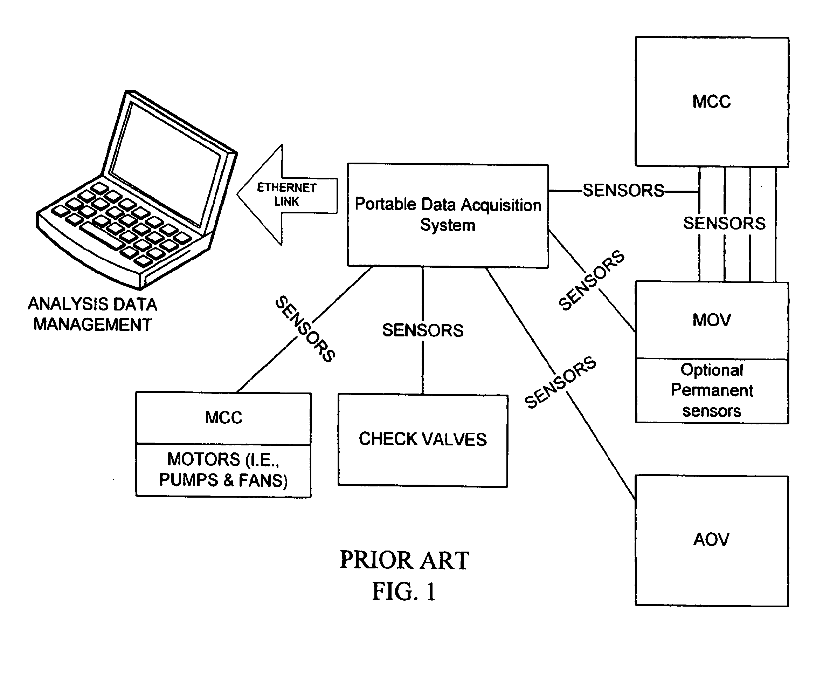

An example of a commercially available portable data acquisition system is the VIPER™ 20 modular system available from Crane Nuclear, Inc. Features of the VIPER 20 include 16 user-definable data channels plus four system-specific channels. There are four module (card) slots that can be changed out depending upon the type of sensors that are needed for the test, since different circuitry is required to provide the correct excitation voltage for different sensors and to process the input signals from these different devices. Fig. 1 illustrates the VIPER 20 portable data acquisition system.

The user must plug the sensor into the correct card and then manually input the sensor type, serial number, sensitivity (i.e., conversion factor to translate a signal to proper engineering units), calibration due date, units of measure (i.e., pounds, amperes, inches, etc.) into the transducer database of the software. In the software, the user then must associate the channel used with the sensor in the transducer database.

Once each sensor is manually selected and assigned, the user must also select the equipment to be monitored from the valve database in the software. If the equipment is not listed in the valve database, the user must create the entry and input pertinent information about it. The user then connects the sensors to the valve and operates the valve. As the valve operates, data from all sensors is acquired. Once data acquisition is complete, the analog signals are converted to digital signals and sent to a notebook computer over an Ethernet link. In the software, the raw data is stored along with a conversion factor. The user can then analyze the data, print graphs, mark events, print reports, etc.

Although current portable diagnostic systems, such as the Viper 20, are accurate and dependable, they are also bulky and cumbersome (approximately 16 pounds) to use. The standard sensor cable types vary depending on the type of sensor and are typically 35 feet long. Multiple keystrokes are required within the software user interface to navigate from data acquisition to analysis.

There is a need for a system that reduces the time it takes to perform and analyze tests, improves accuracy, minimizes maintenance, provides a simplified software user interface, and includes a more portable system. Such a system should provide automatic identification of components, include both a wired and a wireless capability, and provide a battery-powered option. In document US 2004/0164140 A1, a stationary automotive vehicle service system is disclosed that uses an RFID transponder to identify an equipment device under test, for example a specific brake component.

### Summary of the Invention

Exemplary embodiments of the self-configuring data acquisition system include sensors, signal conditioning modules, data transmission means, a central system and data recording means and is used to periodically test process equipment to verify correct configuration and operability and to facilitate necessary adjustments. Automatic identification of the equipment under test, sensors, and signal conditioning modules is provided by digital information units that are installed in, or affixed to, equipment devices, sensors, and signal conditioning units, and transmit the associated identifying information to a data acquisition processing unit.

In one aspect of the invention, a self-configuring data acquisition system is provided for conducting diagnostic testing of process equipment devices. The data acquisition system includes a data acquisition processing unit for controlling diagnostic testing of an equipment device, the equipment device including a digital information unit that stores information uniquely identifying the equipment device and automatically transmits the identifying information to the data acquisition unit. A signal conditioning unit is coupled to the data acquisition unit by a first data transmission means, the signal conditioning unit including a digital information unit that stores information uniquely identifying the signal conditioning unit and automatically transmits the identifying information to the data acquisition unit. A sensor is associated with the equipment device under test, wherein the sensor is coupled to the signal conditioning unit by a second data transmission means, the sensor including a digital information unit that stores information uniquely identifying the sensor and automatically transmits the identifying information to the data acquisition unit. A component receives the identifying information from the sensor and equipment device digital information units and automatically configures the signal conditioning unit, based on the sensor and equipment device identifying information, to excite the equipment device under test and receive a plurality of test data input signals from the equipment device resulting from the excitation.

In another aspect of the invention, a method is provided for automatically conducting diagnostic testing of process equipment devices in a data acquisition system. The method includes the steps of: providing a digital information unit for each of a plurality of components of the data acquisition system including an equipment device under test, a signal conditioning unit, and a sensor associated with an equipment device under test, each digital information unit including information that uniquely identifies a corresponding component; automatically transmitting the identifying information stored on each digital information unit to a data acquisition processing unit; automatically configuring the signal conditioning unit, based on the sensor and equipment device identifying information, to excite the equipment device under test; and receiving a plurality of test data input signals from the equipment device resulting from the excitation by the signal conditioning unit.

### Brief Description of the Drawings

These and other advantages and aspects of the present invention will become apparent and more readily appreciated from the following detailed description of the invention taken in conjunction with the accompanying drawings, as follows.

Fig. 1 illustrates a prior art portable data acquisition system used in the nuclear power industry.

Fig. 2 illustrates a system architecture of the self-configuring data acquisition system in accordance with an embodiment of the invention.

Fig. 3 illustrates a data processing architecture of the self-configuring data acquisition system in accordance with an embodiment of the invention.

Figs. 4-6 illustrate a series of user interfaces for the data acquisition wizard in accordance with an embodiment of the invention.

Fig. 7 illustrates an exemplary circuit diagram for a digital information identification unit.

### Detailed Description of the Invention

The following description of the invention is provided as an enabling teaching of the invention and its best, currently known embodiment. Those skilled in the relevant art will recognize that many changes can be made to the embodiments described, while still obtaining the beneficial results of the present invention. It will also be apparent that some of the desired benefits of the present invention can be obtained by selecting some of the features of the present invention without utilizing other features. Accordingly, those who work in the art will recognize that many modifications and adaptations to the present invention are possible and may even be desirable in certain circumstances, and are a part of the present invention. Thus, the following description is provided as illustrative of the principles of the present invention and not in limitation thereof, since the scope of the present invention is defined by the claims.

In an exemplary embodiment, the self-configuring data acquisition system includes sensors, signal conditioning modules, data transmission means, a central system and data recording means and is used to periodically test process equipment to verify correct configuration and operability and to facilitate necessary adjustments.

Embodiments of the portable diagnostic system for use in the nuclear power industry can acquire and analyze data on air-operated valves (AOV), motor-operated valves (MOV), and check valves. The portable diagnostic system is designed as a rugged, portable acquisition system that provides a step-change improvement in technology when compared to prior art systems. As a result of recent technology advances, embodiments of the portable diagnostic system provide a reduction in complexity making the system easier to transport, use and maintain and allowing increased accuracy.

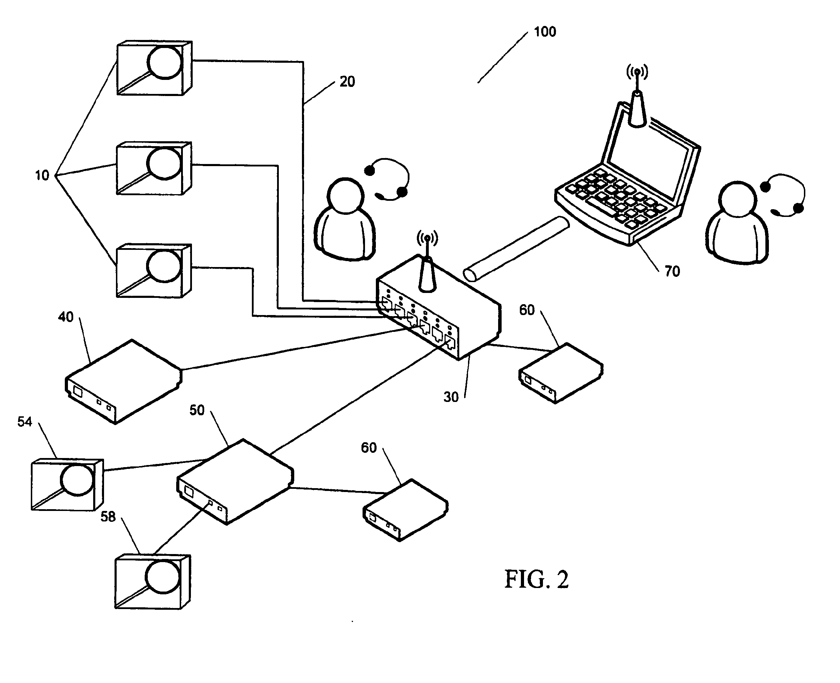

Fig. 2 illustrates an exemplary system architecture. The exemplary portable diagnostic system 100 includes the following assemblies: sensors 10, sensor cables 20, data acquisition unit (DAU) 30, contacts cable assembly (CCA) 40, eddy current signal conditioning assembly (ECSCA) 50, AC power supplies 60 for the DAU 30 and ECSCA 50, and a portable computer (PC) 70. The system can support 12 universal connectors. Additional features include a built-in wireless capability, an eight-hour capacity battery for the DAU 30, automatic identification of sensors and valves, interchangeable cables, a voice communication option and the ability to run the software on an ultra-mobile PC 70. The communications interfaces of the portable diagnostic system 100 comply with both the Ethernet 100BaseT wired and IEEE 801.11g wireless standards by using commercially available modular technology.

The contacts cable assembly 40 internal circuitry detects impedance change across a switch. If the detected current is above a threshold value, the switch is considered closed. Otherwise, the switch is considered open. The CCA assembly 40 can monitor six switches: three open and three closed (i.e., torque, bypass, limit). The CCA assembly 40 multiplexes individual digital detections into an analog signal. The CCA assembly 40 output analog signal varies based on an open or closed condition of each input switch.

The eddy current signal conditioning assembly 50 includes two eddy current sensors that are used to measure the position of a disk in a check valve with electromagnetic principles. The ECSCA 50 excites the sensors and performs signal conditioning of the amplified return for a two-valve configuration into the DAU 30.

The power supplies 60 provide an alternating current voltage operating range from 85 VAC to 260 VAC at 50/60 Hz. The power supplies 60 utilize automatic switching for varying voltage inputs. The same power supply can be used for both DAU 30 and ECSCA 50.

The PC 70 that communicates with DAU 30 should have the following minimum characteristics: minimum of 512 megabytes of RAM, minimum of 30 gigabytes of hard disk storage, an internal battery, Ethernet 100baseT and IEEE 802.11 g wireless capability, minimum screen resolution of 800 x 400 pixels, USB 2.0 compliant expansion and microphone, headset, mouse, and keyboard interfaces. The Ethernet 100BaseT capability is provided by an installed Ethernet adapter and an RJ-45 connector. The IEEE 802.11g wireless capability is provided by an installed wireless adapter.

In exemplary embodiments, the DAU 30 processor should have the capabilities identified herein. The DAU 30 processor (32 bit) should be able to initialize all hardware, save configuration and identification information, and communicate between the sensors 10 and the PC 70. The DAU 30 processor should have the ability to distinguish between a wired or wireless Ethernet connection. The DAU 30 processor should be capable of loading a complete operating system (OS) image and incorporating a real time clock for data synchronization with multiple DAUs. The DAU 30 processor should also include a built-in low-powered, high efficiency switcher supply. The DAU 30 software should be upgradeable remotely over the network. The DAU 30 processor should use multiple clock modes for various operation conditions with clock rates that are adjustable based on current processor requirements. The DAU 30 processor should have adequate flash memory for boot loader, OS and application program storage. The DAU 30 processor should have adequate random access memory (RAM) for the application program and at least 64 Mbytes for data retention. The DAU 30 processor should be capable of saving all configuration data during power interruption. Voice over IP (VoIP) functionality could be accessible to the analysis PC 70 through hardware and software.

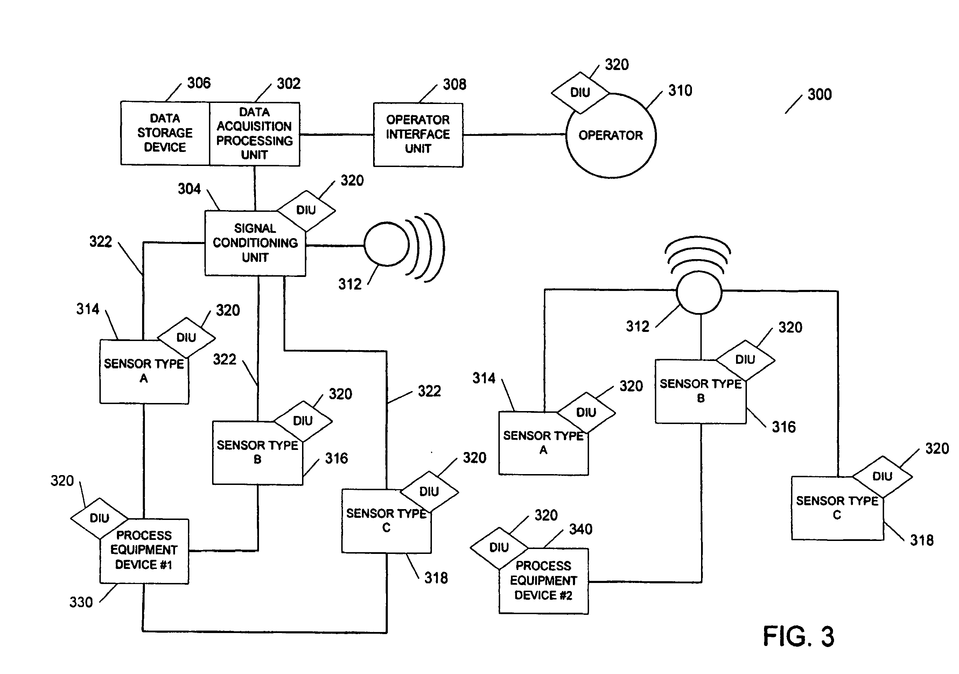

Fig. 3 illustrates a data processing architecture 300 of the self-configuring data acquisition system in an embodiment of the invention. A digital information unit (DIU) 320 in each element of the data acquisition system 300 provides individual identification of the element and other configuring information to a central recording function of the system. These digital information units 320 are installed in each sensor 314, 316, 318, signal conditioning module 304, data transmission component 312 (wireless), 322 (wired), and peripheral device 302, 306, 308 of the system. Each component of process equipment 330, 340 to be tested is also equipped with a digital information unit 320. Potentially, each person 310 operating the data acquisition system 300 could use a digital information unit 320 to identify themselves as the operator of a given test or sequence. The intent is that, at the time of each test, the operator 310 would be required to enter little or no information. Ideally, the system 300 would be connected and would self-configure, and the relevant type of test that would be triggered and stored with no required user interaction. Some selection options might be desired, but these could be reduced to the simplest possible interface (a two-state button or other binary device).

Digital information units 320 are nonvolatile and cannot be altered in normal operation of the data acquisition system 300. The digital information units 320 are writable with a provided device. Each unit 320 is initially written with permanent information pertaining to the element it will describe, such as the identification number or name of the element, serial numbers, size, capacity, etc. The unit 320 can also contain current information pertaining to the element such as date last tested, date last calibrated, test or calibration values, current settings, or set point limits. Writing devices adapted to each circumstance (a sensor or module being periodically calibrated, a piece of equipment being tested, set point values being changed, etc.) are available.

When initiating a test, the data acquisition system 300 will query all connected elements and will self-configure based on the information returned from the digital information units 320. This eliminates the need for the operator 310 to enter information for system components, sensors, equipment being tested, etc., both automating the setup and eliminating transcription and other input errors.

Data transmission means 312, 322 interconnect system subcomponents such as sensors 314, 316, 318, and signal conditioning module 304, which may be either wired or wireless, and are generic in design. Electrical connections are generic and interchangeable wherever possible. The automated configuration function will include the configuration of data transmission means 312, 322, signal conditioning modules 304, system circuits, and other elements to provide the needed electrical connections, sensing circuits, power or excitation circuits, etc. to any connected element based on its identity as conveyed by the digital information unit associated with it.

Digital information units 320 can be physically installed in some elements, such as sensors that would normally have electrical circuits that connect to the system. The units 320 can be attached to equipment as tags or placed in identified locations near the subject elements where they can be scanned or read by a device associated with the system. Units 320 may also be carried by operators 310 as means of user identification or system access.

Embodiments of the present invention utilize digital information ID chip technology to configure the diagnostic system for data acquisition. Each sensor 314, 316, 318 used with the diagnostic system 300 should contain this digital information ID chip 320. Every connector on the signal processing unit 304 will be identical and contain the circuitry necessary for all types of sensors. When the sensor 314, 316, 318 with ID technology is plugged into a connector, the diagnostic system 300 will identify it, configure the appropriate circuitry for the device, and provide an indication that the sensor is connected and providing a good signal. The serial number, calibration information, and sensitivity of the device are automatically recorded and stored in the software database for the test.

Furthermore, the digital information ID chips 320 are writable to store information on the component to be tested. Each valve in the plant can then have a tag affixed to it such that when plugged into the diagnostic system 300 will automatically configure the signal processing unit 304 to acquire data for that particular valve and store the data in the appropriate location 306.

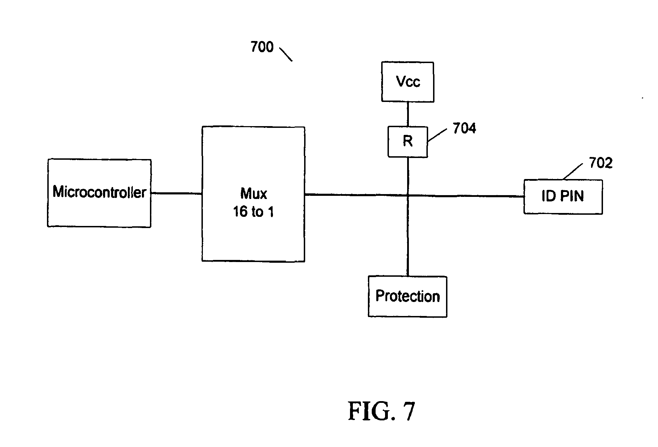

Fig. 7 illustrates an exemplary circuit diagram 700 for a digital information ID unit. The digital information identification (ID) chip 320 should have the following characteristics:
1. ability to transmit information serially from a sensor or valve to the DAU via a single wire;
2. ability to supply power and transmit data on the same wire;
3. since ID chips on the market require a pull up resistor 704 on the ID pin 702 for identification, additional logic should be included to determine if a sensor is connected or not;
4. each sensor input should have a standard scheme of identification;
5. sensor information should be stored locally in flash memory or EEPROM;
6. each sensor should have ample local storage space for identification, configuration and calibration information;
7. each sensor should have an identification code for the module model number, revision level and serial number;
8. interface should be read/write capable;
9. ID pin 702 should be protected against reverse voltage, over voltage and conducted RF noise;
10. bandwidth for the digital interface should be kept low to assure solid communications over long cable lengths and reduced electromagnetic interference (EMI); and
11. digital information ID unit circuitry 700 should support at least three sensors using the same ID pin 702.

Commercially available technology can be used for the auto ID chips. For example, Dallas Semiconductor supplies a 1-wire device such as the DS2432 that combines 1024 bits of EEPROM with a 64-bit secret and 512-bit secure hash algorithm. The DS2432 provides a read memory command that automatically computes and delivers a 160-bit MAC to the 1-wire host (i.e., DAU 30). Each DS2432 has its own factory-lasered 64-bit ROM registration number to provide a unique ID for the system in which it is embedded.

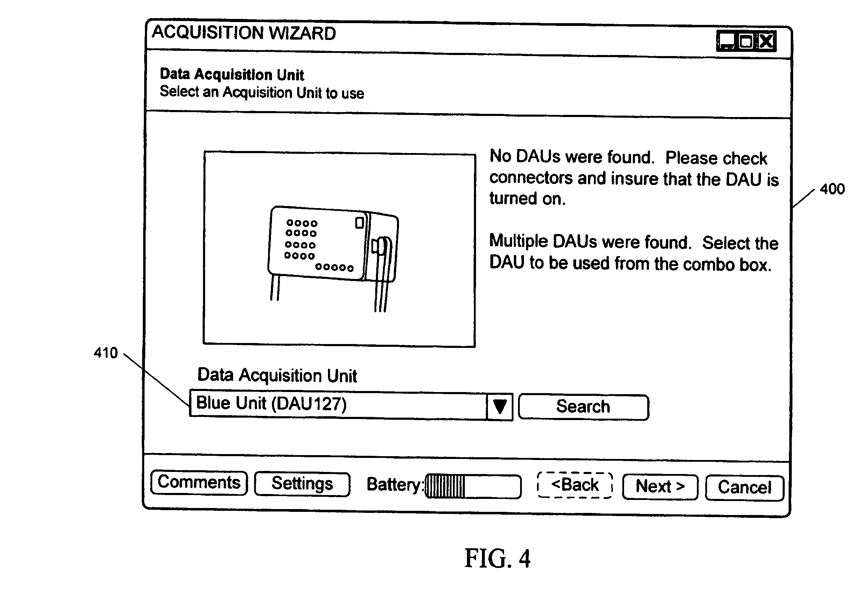

When the diagnostic system 300 is powered up, the software on the data acquisition notebook computer 302 is initiated and will search the Ethernet (wired or wireless) for a signal conditioning unit 304 (referred to as an SCU or DAU). Fig. 4 illustrates an exemplary user interface 400 for the acquisition unit wizard. A combination box 410 is provided for the user 310 to select a signal conditioning unit (i.e., data acquisition unit) 304.

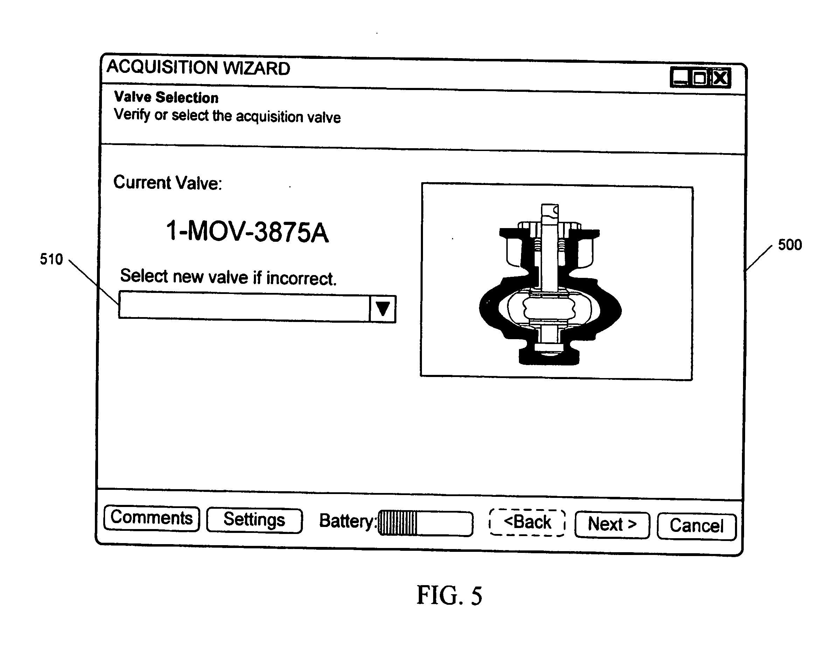

Once the SCU 304 is found, the diagnostic system 300 will poll all connectors plugged into it and identify if a valve tag ID is plugged in or not. If it is, it will identify the valve and associate it with the proper database tag in the software and data storage location 306. Fig. 5 illustrates an exemplary user interface 500 for the acquisition unit wizard. If no valve tag ID is connected, the software of data acquisition unit 302 will prompt the user 310 to select a valve from the database in drop down box 510.

Next, the diagnostic system 300 will read the digital information ID tags 320 of all the sensors/devices plugged into the SCU 304. Based on the sensor IDs, the diagnostic system 300 will automatically configure the SCU 304 hardware 40, 50, 54, 58 to provide the necessary excitation to the device and receive the input signal. The diagnostic system 300 will also store the appropriate sensor information in the record for the test.

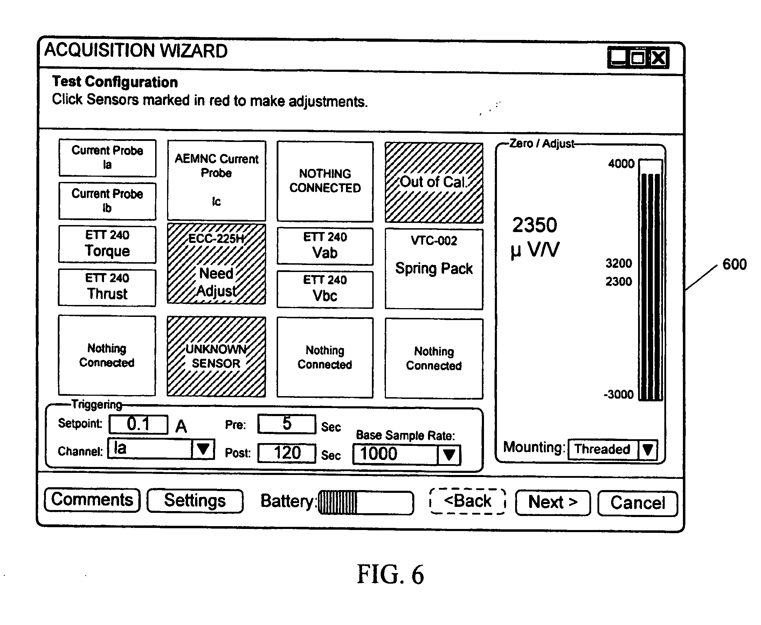

In acquisition mode, the exemplary screen 600 of Fig. 6 will auto-populate information into the PC 302 application software for the connected sensors 314, 316, 318 and valves 330, 340 to include type, serial/model number, and calibration information.

The corresponding structures, materials, acts, and equivalents of all means plus function elements in any claims below are intended to include any structure, material, or acts for performing the function in combination with other claim elements as specifically claimed.

Those skilled in the art will appreciate that many modifications to the exemplary embodiment are possible without departing from the scope of the present invention. In addition, it is possible to use some of the features of the present invention without the corresponding use of the other features. Accordingly, the foregoing description of the exemplary embodiment is provided for the purpose of illustrating the principles of the present invention and not in limitation thereof since the scope of the present invention is defined solely by the appended claims.

## Claims

1. A data acquisition system for conducting diagnostic testing of process equipment devices, comprising:
a data acquisition processing unit (302) for controlling diagnostic testing of an equipment device,
a digital information unit (320) associated with the equipment device, wherein the digital information unit stores information uniquely identifying the equipment device and automatically transmits the equipment device identifying information to the data acquisition processing unit; and
a sensor (314, 316, 318) coupled with the equipment device under test;
**characterised by**
a signal conditioning unit (304) coupled to the data acquisition unit by a first data transmission means, the signal conditioning unit including a digital information unit that stores information uniquely identifying the signal conditioning unit and automatically transmits the signal conditioning unit identifying information to the data acquisition processing unit, wherein the sensor is further coupled to the signal conditioning unit by a second data transmission means and wherein the sensor includes a digital information unit that stores information uniquely identifying the sensor and automatically transmits the sensor identifying information to the data acquisition processing unit; and
a component for automatically configuring the signal conditioning unit for each use of the data acquisition system, based on the sensor and equipment device identifying information received by the data acquisition processing unit, to excite the sensor coupled with the equipment device under test and receive a plurality of test data input signals resulting from the excitation, such that the data acquisition system is self-configuring, wherein
the data acquisition system is portable.

2. The self-configuring data acquisition system for conducting diagnostic testing of claim 1 further comprising a data storage device coupled to the data acquisition unit for storing the plurality of test data input signals.

3. The self-configuring data acquisition system for conducting diagnostic testing of claim 1 wherein the sensor digital information unit stores a serial number and at least one of a calibration information and a sensitivity of the sensor.

4. The self-configuring data acquisition system for conducting diagnostic testing of claim 3 wherein the information stored in the sensor digital information unit is automatically recorded and stored in the data storage device.

5. The self-configuring data acquisition system for conducting diagnostic testing of claim 1 wherein the sensor digital information unit comprises a one-wire automatic identification device.

6. The self-configuring data acquisition system for conducting diagnostic testing of claim 1 wherein the sensor digital information unit is installed in the sensor or wherein the sensor digital information unit is attached to the sensor as a tag.

7. The self-configuring data acquisition system for conducting diagnostic testing of claim 1 wherein the digital information unit associated with the equipment device under test can be read by a scanner and is located in proximity to the equipment device under test.

8. The self-configuring data acquisition system for conducting diagnostic testing of claim 7 wherein the digital information unit associated with the equipment device under test stores at least one of the following data for the equipment device: a date last tested, a date last calibrated, a test value, a calibration value, a current setting, and a setpoint limit.

9. The self-configuring data acquisition system for conducting diagnostic testing of claim 1 wherein the component for automatically configuring the signal conditioning unit comprises a software module installed on the data acquisition unit.

10. The self-configuring data acquisition system for conducting diagnostic testing of claim 1 wherein the first data transmission means comprises either a wired or a wireless communication adapter between the signal conditioning unit and the data acquisition unit.

11. The self-configuring data acquisition system for conducting diagnostic testing of claim 1 wherein the first data transmission means connection comprises an Ethernet 100BaseT adapter or wherein the first data transmission means comprises a wireless adapter.

12. The self-configuring data acquisition system for conducting diagnostic testing of claim 1 wherein the second data transmission means comprises either a wired or a wireless communication adapter between the signal conditioning unit and the sensor.

13. The self-configuring data acquisition system for conducting diagnostic testing of claim 1 wherein the second data transmission means connection comprises an Ethernet 100BaseT adapter or wherein the second data transmission means comprises a wireless adapter.

14. The self-configuring data acquisition system for conducting diagnostic testing of claim 1 wherein the equipment device under test comprises at least one of a motor-operated valve, an air-operated valve, and a check valve.

15. The self-configuring data acquisition system for conducting diagnostic testing of claim 14 wherein the equipment device is field-tested in an electric power generating plant installation.

16. The self-configuring data acquisition system for conducting diagnostic testing of claim 9 further comprising a software user interface to select a data acquisition unit to control diagnostic testing and, if prompted by the software module, to select the equipment device to test.

17. A method for automatically conducting diagnostic testing of process equipment devices using a self-configuring portable data acquisition system, each equipment device having a digital information unit associated therewith, the digital information unit storing information that uniquely identifies the equipment device,**characterised by**:
providing a digital information unit for each of a plurality of components of the data acquisition system including a signal conditioning unit having a plurality of universal connectors and a sensor associated with the equipment device under test, each digital information unit storing information that uniquely identifies a corresponding component;
automatically receiving the identifying information stored on each digital information unit by a data acquisition processing unit;
automatically configuring the signal conditioning unit, based on the sensor and equipment device identifying information received by the data acquisition processing unit, to excite the sensor associated with the equipment device under test; and
receiving a plurality of test data input signals from the sensor associated with the equipment device resulting from the excitation by the signal conditioning unit.

18. The method for automatically conducting diagnostic testing of claim 17 further comprising storing the plurality of test data signals in a data storage device.

19. The method for automatically conducting diagnostic testing of claim 17 further
comprising storing a serial number and at least one of a calibration information and sensitivity in the sensor digital information unit.

20. The method for automatically conducting diagnostic testing of claim 19 further
comprising automatically recording and storing in the data storage device the information stored in the sensor digital information unit.

21. The method for automatically conducting diagnostic testing of claim 17 further
comprising installing a digital information unit in the sensor or further comprising attaching a digital information unit to the sensor as a tag or further comprising attaching a digital information unit to the equipment device under test as a tag.

22. The method for automatically conducting diagnostic testing of claim 17 further
comprising locating a digital information unit in proximity to the equipment under test and scanning the information stored in the digital information unit and transmitting the scanned information to the signal conditioning unit.

23. The method for automatically conducting diagnostic testing of claim 22 wherein the digital information unit corresponding to the equipment device under test stores at least one of the following data for the equipment device: a date last tested, a date last calibrated, a test value, a calibration value, a current setting, and a set point limit.

24. The method for automatically conducting diagnostic testing of claim 17 further
comprising providing a wired or a wireless connection for communicating information between the signal conditioning unit and the data acquisition processing unit that controls diagnostic testing of the equipment device.

25. The method for automatically conducting diagnostic testing of claim 17 further
comprising providing a wired or a wireless connection for communicating information between the sensor and the signal conditioning unit.

26. The method for automatically conducting diagnostic testing of claim 17 wherein the equipment device under test comprises at least one of a motor-operated valve, an air-operated valve, and a check valve.

27. The data acquisition system of claim 1, wherein the data acquisition processing unit automatically configures the component for automatically configuring the signal conditioning unit for each use of the portable data acquisition system, based on the sensor and equipment device identifying information received by the data acquisition processing unit from the respective digital information unit, to excite the sensor coupled with the equipment device under test and receive a plurality of data signals resulting from the excitation.

## Patentansprüche

1. Datenerfassungssystem zum Durchführen einer Diagnoseprüfung von Prozessanlagenvorrichtungen, das umfasst:
eine Datenerfassungsverarbeitungseinheit (302) zum Steuern der Diagnoseprüfung einer Anlagenvorrichtung,
eine Einheit (320) für digitale Informationen, die der Anlagenvorrichtung zugeordnet ist, wobei die Einheit für digitale Informationen Informationen speichert, die die Anlagenvorrichtung eindeutig identifizieren, und die Anlagenvorrichtungs-Identifikationsinformationen automatisch zur Datenerfassungsverarbeitungseinheit überträgt; und
einen Sensor (314, 316, 318), der mit der geprüften Anlagenvorrichtung gekoppelt ist;
**gekennzeichnet durch**
eine Signalaufbereitungseinheit (304), die mit der Datenerfassungseinheit **durch** eine erste Datenübertragungseinrichtung gekoppelt ist, wobei die Signalaufbereitungseinheit eine Einheit für digitale Informationen umfasst, die Informationen speichert, die die Signalaufbereitungseinheit eindeutig identifizieren, und die Signalaufbereitungseinheits-Identifikationsinformationen automatisch zur Datenerfassungsverarbeitungseinheit überträgt, wobei der Sensor ferner mit der Signalaufbereitungseinheit **durch** eine zweite Datenübertragungseinrichtung gekoppelt ist, und wobei der Sensor eine Einheit für digitale Informationen umfasst, die Informationen speichert, die den Sensor eindeutig identifizieren, und die Sensoridentifikationsinformationen automatisch zur Datenerfassungsverarbeitungseinheit überträgt; und
eine Komponente zum automatischen Konfigurieren der Signalaufbereitungseinheit für jede Verwendung des Datenerfassungssystems auf der Basis der Sensor- und Anlagenvorrichtungs-Identifikationsinformationen, die **durch** die Datenerfassungsverarbeitungseinheit empfangen werden, um den mit der geprüften Anlagenvorrichtung gekoppelten Sensor anzuregen und eine Vielzahl von Testdateneingangssignalen, die sich aus der Anregung ergeben, zu empfangen, so dass
das Datenerfassungssystem selbstkonfigurierend ist, wobei das Datenerfassungssystem tragbar ist.

2. Selbstkonfigurierendes Datenerfassungssystem zum Durchführen einer Diagnoseprüfung nach Anspruch 1, das ferner eine Datenspeichervorrichtung, die mit der Datenerfassungseinheit gekoppelt ist, zum Speichern der Vielzahl von Testdateneingangssignalen umfasst.

3. Selbstkonfigurierendes Datenerfassungssystem zum Durchführen einer Diagnoseprüfung nach Anspruch 1, wobei die Einheit für digitale Informationen des Sensors eine Seriennummer und Kalibrierungsinformationen und/oder eine Empfindlichkeit des Sensors speichert.

4. Selbstkonfigurierendes Datenerfassungssystem zum Durchführen einer Diagnoseprüfung nach Anspruch 3, wobei die in der Einheit für digitale Informationen des Sensors gespeicherten Informationen in der Datenspeichervorrichtung automatisch aufgezeichnet und gespeichert werden.

5. Selbstkonfigurierendes Datenerfassungssystem zum Durchführen einer Diagnoseprüfung nach Anspruch 1, wobei die Einheit für digitale Informationen des Sensors eine automatische Eindraht-Identifikationsvorrichtung umfasst.

6. Selbstkonfigurierendes Datenerfassungssystem zum Durchführen einer Diagnoseprüfung nach Anspruch 1, wobei die Einheit für digitale Informationen des Sensors im Sensor installiert ist oder wobei die Einheit für digitale Informationen des Sensors als Anhänger am Sensor befestigt ist.

7. Selbstkonfigurierendes Datenerfassungssystem zum Durchführen einer Diagnoseprüfung nach Anspruch 1, wobei die Einheit für digitale Informationen, die der geprüften Anlagenvorrichtung zugeordnet ist, durch einen Abtaster gelesen werden kann und in der Nähe der geprüften Anlagenvorrichtung angeordnet ist.

8. Selbstkonfigurierendes Datenerfassungssystem zum Durchführen einer Diagnoseprüfung nach Anspruch 7, wobei die Einheit für digitale Informationen, die der geprüften Anlagenvorrichtung zugeordnet ist, mindestens eine der folgenden Daten für die Anlagenvorrichtung speichert: ein Datum der letzten Prüfung, ein Datum der letzten Kalibrierung, einen Prüfwert, einen Kalibrierungswert, eine aktuelle Einstellung und eine Sollwertgrenze.

9. Selbstkonfigurierendes Datenerfassungssystem zum Durchführen einer Diagnoseprüfung nach Anspruch 1, wobei die Komponente zum automatischen Konfigurieren der Signalaufbereitungseinheit ein Softwaremodul umfasst, das in der Datenerfassungseinheit installiert ist.

10. Selbstkonfigurierendes Datenerfassungssystem zum Durchführen einer Diagnoseprüfung nach Anspruch 1, wobei die erste Datenübertragungseinrichtung entweder einen verdrahteten oder einen drahtlosen Kommunikationsadapter zwischen der Signalaufbereitungseinheit und der Datenerfassungseinheit umfasst.

11. Selbstkonfigurierendes Datenerfassungssystem zum Durchführen einer Diagnoseprüfung nach Anspruch 1, wobei die erste Datenübertragungseinrichtungsverbindung einen Ethernet-100BaseT-Adapter umfasst oder wobei die erste Datenübertragungseinrichtung einen drahtlosen Adapter umfasst.

12. Selbstkonfigurierendes Datenerfassungssystem zum Durchführen einer Diagnoseprüfung nach Anspruch 1, wobei die zweite Datenübertragungseinrichtung entweder einen verdrahteten oder einen drahtlosen Kommunikationsadapter zwischen der Signalaufbereitungseinheit und dem Sensor umfasst.

13. Selbstkonfigurierendes Datenerfassungssystem zum Durchführen einer Diagnoseprüfung nach Anspruch 1, wobei die zweite Datenübertragungseinrichtungsverbindung einen Ethernet-100BaseT-Adapter umfasst oder wobei die zweite Datenübertragungseinrichtung einen drahtlosen Adapter umfasst.

14. Selbstkonfigurierendes Datenerfassungssystem zum Durchführen einer Diagnoseprüfung nach Anspruch 1, wobei die geprüfte Anlagenvorrichtung ein motorbetätigtes Ventil, ein luftbetätigtes Ventil und/oder ein Rückschlagventil umfasst.

15. Selbstkonfigurierendes Datenerfassungssystem zum Durchführen einer Diagnoseprüfung nach Anspruch 14, wobei die Anlagenvorrichtung in einer Kraftwerkinstallation am Einsatzort geprüft wird.

16. Selbstkonfigurierendes Datenerfassungssystem zum Durchführen einer Diagnoseprüfung nach Anspruch 9, das ferner eine Software-Benutzerschnittstelle zum Auswählen einer Datenerfassungseinheit zum Steuern einer Diagnoseprüfung und, falls sie durch das Softwaremodul aufgefordert wird, zum Auswählen der zu prüfenden Anlagenvorrichtung umfasst.

17. Verfahren zum automatischen Durchführen einer Diagnoseprüfung von Prozessanlagenvorrichtungen unter Verwendung eines selbstkonfigurierenden tragbaren Datenerfassungssystems, wobei jeder Anlagenvorrichtung eine Einheit für digitale Informationen zugeordnet ist, wobei die Einheit für digitale Informationen Informationen speichert, die die Anlagenvorrichtung eindeutig identifizieren, **gekennzeichnet durch**:
Vorsehen einer Einheit für digitale Informationen für jede einer Vielzahl von Komponenten des Datenerfassungssystems, einschließlich einer Signalaufbereitungseinheit mit einer Vielzahl von universellen Verbindungselementen und eines Sensors, der der geprüften Anlagenvorrichtung zugeordnet ist, wobei jede Einheit für digitale Informationen Informationen speichert, die eine entsprechende Komponente eindeutig identifizieren;
automatisches Empfangen der in jeder Einheit für digitale Informationen gespeicherten Identifikationsinformationen **durch** eine Datenerfassungsverarbeitungseinheit;
automatisches Konfigurieren der Signalaufbereitungseinheit auf der Basis der Sensor- und der Anlagenvorrichtungs-Identifikationsinformationen, die **durch** die Datenerfassungsverarbeitungseinheit empfangen werden, um den der geprüften Anlagenvorrichtung zugeordneten Sensor anzuregen; und
Empfangen einer Vielzahl von Testdateneingangssignalen von dem der Anlagenvorrichtung zugeordneten Sensor, die sich aus der Anregung ergeben, **durch** die Signalaufbereitungseinheit.

18. Verfahren zum automatischen Durchführen einer Diagnoseprüfung nach Anspruch 17, das ferner das Speichern der Vielzahl von Testdatensignalen in einer Datenspeichervorrichtung umfasst.

19. Verfahren zum automatischen Durchführen einer Diagnoseprüfung nach Anspruch 17, das ferner das Speichern einer Seriennummer und von Kalibrierungsinformationen und/oder der Empfindlichkeit in der Einheit für digitale Informationen des Sensors umfasst.

20. Verfahren zum automatischen Durchführen einer Diagnoseprüfung nach Anspruch 19, das ferner das automatische Aufzeichnen und Speichern der in der Einheit für digitale Informationen des Sensors gespeicherten Informationen in der Datenspeichervorrichtung umfasst.

21. Verfahren zum automatischen Durchführen einer Diagnoseprüfung nach Anspruch 17, das ferner das Installieren einer Einheit für digitale Informationen im Sensor umfasst oder ferner das Befestigen einer Einheit für digitale Informationen am Sensor als Anhänger umfasst oder ferner das Befestigen einer Einheit für digitale Informationen an der geprüften Anlagenvorrichtung als Anhänger umfasst.

22. Verfahren zum automatischen Durchführen einer Diagnoseprüfung nach Anspruch 17, das ferner das Auffinden einer Einheit für digitale Informationen in der Nähe der geprüften Anlage und das Abtasten der in der Einheit für digitale Informationen gespeicherten Informationen und das Übertragen der abgetasteten Informationen zur Signalaufbereitungseinheit umfasst.

23. Verfahren zum automatischen Durchführen einer Diagnoseprüfung nach Anspruch 22, wobei die Einheit für digitale Informationen, die der geprüften Anlagenvorrichtung entspricht, mindestens eine der folgenden Daten für die Anlagenvorrichtung speichert: ein Datum der letzten Prüfung, ein Datum der letzten Kalibrierung, einen Prüfwert, einen Kalibrierungswert, eine aktuelle Einstellung und eine Sollwertgrenze.

24. Verfahren zum automatischen Durchführen einer Diagnoseprüfung nach Anspruch 17, das ferner das Vorsehen einer verdrahteten oder einer drahtlosen Verbindung zur Übertragung von Informationen zwischen der Signalaufbereitungseinheit und der Datenerfassungsverarbeitungseinheit, die die Diagnoseprüfung der Anlagenvorrichtung steuert, umfasst.

25. Verfahren zum automatischen Durchführen einer Diagnoseprüfung nach Anspruch 17, das ferner das Vorsehen einer verdrahteten oder einer drahtlosen Verbindung zur Übertragung von Informationen zwischen dem Sensor und der Signalaufbereitungseinheit umfasst.

26. Verfahren zum automatischen Durchführen einer Diagnoseprüfung nach Anspruch 17, wobei die geprüfte Anlagenvorrichtung ein motorbetätigtes Ventil, ein luftbetätigtes Ventil und/oder ein Rückschlagventil umfasst.

27. Datenerfassungssystem nach Anspruch 1, wobei die Datenerfassungsverarbeitungseinheit die Komponente zum automatischen Konfigurieren der Signalaufbereitungseinheit für jede Verwendung des tragbaren Datenerfassungssystems auf der Basis der Sensor- und Anlagenvorrichtungs-Identifikationsinformationen, die durch die Datenerfassungsverarbeitungseinheit von der jeweiligen Einheit für digitale Informationen empfangen werden, automatisch konfiguriert, um den mit der geprüften Anlagenvorrichtung gekoppelten Sensor anzuregen und eine Vielzahl von Datensignalen zu empfangen, die sich aus der Anregung ergeben.

## Revendications

1. Système d'acquisition de données destiné à l'exécution d'un essai de diagnostic des dispositifs d'équipement de processus, comprenant :
un dispositif de traitement d'acquisition des données (302) destiné à contrôler l'essai de diagnostic d'un dispositif d'équipement,
un dispositif d'information numérique (320) associé au dispositif d'équipement, dans lequel le dispositif d'information numérique stocke des informations uniquement en identifiant le dispositif d'équipement et transmet automatiquement les informations d'identification du dispositif d'équipement au dispositif de traitement d'acquisition des données ; et
un capteur (314, 316, 318) accouplé au dispositif d'équipement sous essai ;
**caractérisé par**
un dispositif de conditionnement du signal (304) accouplé au dispositif d'acquisition des données par un premier moyen de transmission des données, le dispositif de conditionnement du signal comprenant un dispositif d'information numérique qui stocke des informations uniquement en identifiant le dispositif de conditionnement du signal et transmet automatiquement l'information d'identification du dispositif de conditionnement du signal au dispositif de traitement d'acquisition des données, dans lequel le capteur est par ailleurs accouplé au dispositif de conditionnement du signal par un second moyen de transmission des données et dans lequel le capteur comprend un dispositif d'information numérique qui stocke des informations uniquement en identifiant le capteur et transmet les informations d'identification du capteur au dispositif de traitement d'acquisition des données ; et
un composant destiné à la configuration automatique du dispositif de conditionnement du signal pour toute utilisation du système d'acquisition des données, basé sur le capteur et un dispositif d'équipement identifiant les informations reçues par le dispositif de traitement d'acquisition des données, pour exciter le capteur accouplé au dispositif d'équipement sous essai et recevoir une pluralité de signaux d'entrée des données d'essai résultant de l'excitation, de sorte que
le système d'acquisition des données s'autoconfigure, dans lequel
le système d'acquisition des données est portable.

2. Système d'acquisition des données autoconfigurable destiné à l'exécution d'un essai de diagnostic selon la revendication 1, comprenant par ailleurs un dispositif de stockage des données accouplé au dispositif d'acquisition des données pour stocker la pluralité des signaux d'entrée des données d'essai.

3. Système d'acquisition des données autoconfigurable destiné à l'exécution d'un essai de diagnostic selon la revendication 1, dans lequel le dispositif d'information numérique du capteur stocke un numéro de série et au moins l'une des suivantes : une information de calibrage et une sensibilité du capteur.

4. Système d'acquisition des données autoconfigurable destiné à l'exécution d'un essai de diagnostic selon la revendication 3, dans lequel les informations stockées dans le dispositif d'information numérique du capteur sont enregistrées automatiquement et stockées dans le dispositif de stockage des données.

5. Système d'acquisition des données autoconfigurable destiné à l'exécution d'un essai de diagnostic selon la revendication 1, dans lequel le dispositif d'information numérique du capteur comporte un dispositif d'identification à un fil.

6. Système d'acquisition des données autoconfigurable destiné à l'exécution d'un essai de diagnostic selon la revendication 1, dans lequel le dispositif d'information numérique du capteur est installé dans le capteur ou dans lequel le dispositif d'information numérique du capteur est fixé au capteur comme une étiquette.

7. Système d'acquisition des données autoconfigurable destiné à l'exécution d'un essai de diagnostic selon la revendication 1, dans lequel le dispositif d'information numérique associé avec le dispositif d'équipement sous essai peut être lu par un scanner et est placé à proximité du dispositif d'équipement sous essai.

8. Système d'acquisition des données autoconfigurable destiné à l'exécution d'un essai de diagnostic selon la revendication 7 dans lequel le dispositif d'information numérique associé avec le dispositif d'équipement sous essai stocke au moins une des données suivantes pour le dispositif d'équipement : une donnée testée dernièrement, une donnée calibrée dernièrement, une valeur de test, une valeur de calibrage, un paramètre actuel et une limite de point de réglage.

9. Système d'acquisition des données autoconfigurable destiné à l'exécution d'un essai de diagnostic selon la revendication 1, dans lequel le composant de configuration automatique du dispositif de conditionnement du signal comporte un module logiciel installé sur le dispositif d'acquisition des données.

10. Système d'acquisition des données autoconfigurable destiné à l'exécution d'un essai de diagnostic selon la revendication 1, dans lequel le moyen de la première transmission de données comporte soit un adaptateur de communication à fil, soit sans fil entre le dispositif de conditionnement du signal et le dispositif d'acquisition des données.

11. Système d'acquisition des données autoconfigurable destiné à l'exécution d'un essai de diagnostic selon la revendication 1, dans lequel la connexion du moyen de la première transmission de données comporte un adaptateur Ethernet 100BaseT ou dans lequel le moyen de la première transmission de données comporte un adaptateur sans fil.

12. Système d'acquisition des données autoconfigurable destiné à l'exécution d'un essai de diagnostic selon la revendication 1, dans lequel le moyen de la seconde transmission de données comporte soit un adaptateur de communication à fil, soit sans fil entre le dispositif de conditionnement du signal et le capteur.

13. Système d'acquisition des données autoconfigurable destiné à l'exécution d'un essai de diagnostic selon la revendication 1, dans lequel la connexion du moyen de la seconde transmission de données comporte un adaptateur Ethernet 100BaseT ou dans lequel le moyen de la seconde transmission de données comporte un adaptateur sans fil.

14. Système d'acquisition des données autoconfigurable destiné à l'exécution d'un essai de diagnostic selon la revendication 1, dans lequel le dispositif d'équipement sous essai comporte au moins l'une des suivantes : une vanne actionnée par moteur, une vanne actionnée par air et une vanne de contrôle.

15. Système d'acquisition des données autoconfigurable destiné à l'exécution d'un essai de diagnostic selon la revendication 14, dans lequel le dispositif d'équipement est testé sur le terrain dans une installation industrielle génératrice d'énergie électrique.

16. Système d'acquisition des données autoconfigurable destiné à l'exécution d'un essai de diagnostic selon la revendication 9, comprenant par ailleurs une interface utilisateur logicielle pour sélectionner un dispositif d'acquisition des données pour la commande de l'essai de diagnostic et si invité par le module logiciel, pour sélectionner le dispositif d'équipement pour l'essai.

17. Méthode d'exécution automatique d'un essai de diagnostic des dispositifs d'équipement de processus utilisant un système portable d'acquisition des données autoconfigurable, chaque dispositif d'équipement ayant un dispositif d'information numérique associé à celui-ci, le dispositif d'information numérique stockant des informations qui identifient uniquement le dispositif d'équipement, **caractérisée par** :
la présence d'un dispositif d'information numérique pour chacun d'une pluralité de composants du système d'acquisition des données comprenant un dispositif de conditionnement du signal ayant une pluralité de connecteurs universels et un capteur associé avec le dispositif d'équipement sous essai, chaque dispositif d'information numérique stockant des informations qui identifient uniquement un composant correspondant ;
la réception automatique des informations d'identification stockées sur chaque dispositif d'information numérique par un dispositif de traitement d'acquisition des données ;
la configuration automatique du dispositif de conditionnement du signal, basée sur le capteur et le dispositif d'équipement identifiant les informations reçues par le dispositif de traitement d'acquisition des données pour exciter le capteur associé avec le dispositif d'équipement sous essai ; et
la réception d'une pluralité de signaux d'entrée de données d'essai à partir du capteur associé avec le dispositif d'équipement résultant de l'excitation par le dispositif de conditionnement du signal.

18. Méthode d'exécution automatique d'un essai de diagnostic selon la revendication 17, comprenant par ailleurs la pluralité des signaux de données d'essai dans un dispositif de stockage des données.

19. Méthode d'exécution automatique d'un essai de diagnostic selon la revendication 17, comprenant par ailleurs le stockage d'un numéro de série et au moins une des suivantes : une information de calibrage et une sensibilité dans le dispositif d'information numérique du capteur.

20. Méthode d'exécution automatique d'un essai de diagnostic selon la revendication 19, comprenant par ailleurs l'enregistrement automatique et le stockage dans le dispositif de stockage des données des informations stockées dans le dispositif d'information numérique du capteur.

21. Méthode d'exécution automatique d'un essai de diagnostic selon la revendication 17, comprenant par ailleurs l'installation d'un dispositif d'information numérique dans le capteur, ou comprenant par ailleurs la fixation d'un dispositif d'information numérique au capteur comme une étiquette, ou comprenant par ailleurs la fixation d'un dispositif d'information numérique au dispositif d'équipement sous essai comme une étiquette.

22. Méthode d'exécution automatique d'un essai de diagnostic selon la revendication 17, comprenant par ailleurs le placement d'un dispositif d'information numérique à proximité de l'équipement sous essai, le scan des informations stockées dans le dispositif d'information numérique et la transmission des informations scannées au dispositif de conditionnement du signal.

23. Méthode d'exécution automatique d'un essai de diagnostic selon la revendication 22 dans laquelle le dispositif d'information numérique correspondant au dispositif d'équipement sous essai stocke au moins une des données suivantes pour le dispositif d'équipement : une donnée testée dernièrement, une donnée calibrée dernièrement, une valeur de test, une valeur de calibrage, un paramètre actuel et une limite de point de réglage.

24. Méthode d'exécution automatique d'un essai de diagnostic selon la revendication 17, comprenant par ailleurs la présence d'une connexion à fil ou sans fil destinée aux informations de communication entre le dispositif de conditionnement du signal et le dispositif de traitement d'acquisition des données qui commande l'essai de diagnostic du dispositif d'équipement.

25. Méthode d'exécution automatique d'un essai de diagnostic selon la revendication 17, comprenant par ailleurs la présence d'une connexion à fil ou sans fil destinée aux informations de communication entre le capteur et le dispositif de conditionnement du signal.

26. Méthode d'exécution automatique d'un essai de diagnostic selon la revendication 17, dans laquelle le dispositif d'équipement sous essai comporte au moins l'une des suivantes : une vanne actionnée par moteur, une vanne actionnée par air et une vanne de contrôle.

27. Système d'acquisition des données selon la revendication 1, dans lequel le dispositif de traitement d'acquisition des données configure automatiquement le composant de configuration automatique du dispositif de conditionnement du signal pour chaque utilisation du système portable d'acquisition des données, basé sur les informations d'identification du capteur et du dispositif d'équipement reçues par le dispositif de traitement d'acquisition des données à partir du dispositif d'information numérique respectif, pour exciter le capteur accouplé avec le dispositif d'équipement sous essai et recevoir une pluralité de signaux de données résultant de l'excitation.
